# EUROPEAN PATENT APPLICATION

(11) **EP 4 826 347 A2**
(43) Date of publication of application: **21.10.2026**
(21) Application number: 26172420.7
(22) Date of filing: 15.04.2026
(51) Int. Cl.: G01M 3/04, E03B 7/07

(54) **A DEVICE, A SYSTEM, A BATHROOM SUBFLOOR MODULE AND METHOD FOR LEAKAGE DETECTION IN A BATHROOM**

(30) Priority: 16.04.2025 NL 2040201
(71) Applicant: RJS Allround Services B.V., 1719 NK Aartswoud (NL)
(72) Inventor: SLOB, Robert-Jan, 1719 NK Aartswoud (NL)
(74) Representative: V.O.

(57) **Abstract**

The invention relates to a leakage detection device (1) for detecting a water leakage occurring in a bathroom. The leakage detection device comprises a moisture sensor (3) that is arranged in moisture transferring contact with a moisture penetrable subfloor of the bathroom. The moisture penetrable subfloor of the bathroom may comprise a sand-cement layer or screed. Further, the moisture sensor preferably is in moisture transferring contact with the sand-cement layer or screed, for example embedded in the sand-cement layer or screed.

## Description

The invention generally relates to a detection of a water leakage occurring in a bathroom using a device, a system and/or a method.

Bathrooms are prone to experiencing water leakages due to various appliances that use water such as showers, bath tubs, wash basins and/or toilets. In principle, each component included in a water supply or drain towards or from said appliances can be an origin for a water leakage. For example, water leakages can find their origin near a floor drain of a shower, drain pipes of wash basins and/or bath tubs, but also in general supply pipes starting from a main water supply forming a main path that branches out towards the various appliances.

It might be difficult to locate the origin of a water leakage due to the various possible leakage sources as described. Additionally, depending on a type of water leakage origin it may also be difficult to detect a water leakage before any consequential damage has occurred. For example, water leakages that occur in components that are installed below the floor of a bathroom might be difficult to detect in a timely manner. If such leakages are not detected in time, a continuous exposure to water can lead to sever consequential damage to floors, walls and/or ceilings. These damages may not be limited to only the bathroom and can spread to neighboring rooms if the leakage continues undetected for a prolonged period of time.

The invention aims to provide for a device, a system, and a method with which one or more of the above disadvantages can be ameliorated. Thereto, the invention provides for a leakage detection device for detecting a water leakage occurring in a bathroom, the leakage detection device comprising a moisture sensor that is arranged in moisture transferring contact with a moisture absorbing subfloor of the bathroom

By providing a moisture sensor in moisture transferring contact with a moisture absorbing subfloor of the bathroom, an occurrence of a water leakage can be detected relatively easily and quickly. The invention is at least based on the insight that water moistening a moisture absorbing subfloor of the bathroom will generally be absorbed by or penetrate at least a substantial portion of or even a complete subfloor. By probing such moisture absorbing or moisture penetrable subfloor, using a moisture sensor in moisture transferring contact therewith, the occurrence of a water leakage can thus be measured in a relatively quick, reliable and easy manner.

The moisture sensor arranged somewhere in moisture transferring contact with the subfloor can advantageously detect a water leakage occurring anywhere in the bathroom if the water is absorbed by the moisture absorbing subfloor of the bathroom. This allows for a timely detection of said water leakage and can prompt a swift response which minimizes possible consequential damage by limiting the continuous exposure of the walls, floors, and/or ceilings to water. The moisture of a water leakage can be absorbed by the subfloor of the bathroom, even if an actual origin of the water leakage is not visible. Therefore, the occurrence of a leakage can still be detected in case of invisible origins as the water spreads to the subfloor of the bathroom. The leakage can be detected since the moisture sensor is in moisture transferring contact with the moisture absorbing or moisture penetrable subfloor. The contact can be simply due to the moisture sensor being placed on a surface area of the subfloor. The sensor could also be in contact with the subfloor by being embedded in the subfloor. It is also possible that the subfloor comprises multiple layers and that the sensor is in contact with a specific moisture absorbing layer or multiple layers of the bathroom subfloor.

For example, the moisture absorbing subfloor of the bathroom could comprise a sand-cement layer or screed, wherein the moisture sensor is in moisture transferring contact with the sand-cement layer or screed, preferably embedded in the sand-cement layer or screed. Furthermore a moisture absorbing subfloor can comprise an adhesive layer, or an adhesive-containing layer, or an adhesive-based layer, wherein the moisture sensor is in moisture transferring contact with the adhesive layer, or the adhesive-containing layer, or the adhesive-based layer, preferably embedded in the adhesive layer, or the adhesive-containing layer, or the adhesive-based layer. For example this may be the adhesive layer used for bonding a tiled floor to wood.

Generally, moisture from a water leakage is absorbed by the sand-cement layer or screed which is in contact with the moisture sensor. The moisture is then transferred to the moisture sensor due to the moisture transferring properties of the sand-cement, enabling the leakage detection device to detect the presence of a water leakage in the bathroom. The subfloor of the bathroom can also comprise multiple layers of various other materials. For example, since bathroom floors are commonly furnished with tiles, the subfloor might have a layer of tile adhesives. Also tile adhesives may be moisture transferring thus transferring moisture to a moisture sensor which is in contact with said tile adhesives layer.

The moisture sensor may be located in proximity of a bathroom subfloor module, such as a drain pipe at least partially embedded in the moisture absorbing subfloor.

For example, the moisture sensor can be attached to an outer surface of the bathroom subfloor module, preferably to an outer surface at a bottom side of the bathroom subfloor module.

A detection time of a water leakage may be shortened by having a moisture sensor located near a bathroom subfloor module, as a transfer time of moisture absorbed by the subfloor from a leaking bathroom subfloor module towards the moisture sensor is reduced. Then, consequential damage caused by said water leakage might be limited. A bathroom subfloor module causing a water leakage can be any module supplying or draining water such as a drain pipe, floor drains and/or electric floor heating mats containing heated water, mesh mats comprising various mesh wires and connected or provided with heating wires. These bathroom subfloor modules can be partially embedded in the subfloor. For example a drain pipe generally has connecting parts that are located under the subfloor and form a connection with a main water valve. Further, a drain pipe may include connecting parts that are connected with a wash basin that is stationed above the bathroom subfloor.

The moisture sensor can be associated with a coupling structure of the bathroom subfloor module.

By coupling the moisture sensor to a coupling structure of the bathroom subfloor module, a proper, effective and stationary placement of the moisture sensor relative to the bathroom subfloor module can be achieved. Additionally it provides for the possibility of placing the sensor in a pre-determined place relative to a bathroom subfloor module. For example, the bathroom subfloor module could be an electric floor heating mat that is embodied as a mesh mat comprising various mesh and/or heating wires, wherein the mesh mat is subdivided into several zones, each zone could be provided with a moisture sensor to enable the identification of a water leakage in a specific zone. It may also help when the sensor is attached before the floor is installed or formed, since some layers of the subfloor may be poured potentially cause a shift or displacement in the positioning of the sensor e.g. if the sensor is not anchored to a specific position. The coupling structure can be embodied as a hook or an eyelet, but it can also be formed as a cavity for receiving the moisture sensor. The coupling structure could further be implemented as a notch or a cam that can act as a guide for properly placing the sensor at a pre-determined location.

The leak detection device may comprise a casing tube, at least partially cast in the subfloor of the bathroom, the casing tube extending between a distal end and a proximal end, as well as a guiding line connected to the moisture sensor and running through the casing tube.

A casing tube may provide protection to the moisture sensor and the guiding line. Further, it may act as a predetermined path for the sensor to follow e.g. towards and/or from a predetermined sensor location. For example the casing tube could be laid down to follow a specific path in the subfloor such as near edges of the floor and along or around bathroom subfloor modules. The casing tube could be firmly placed and anchored in position e.g. prior to forming, harding and/or curing the subfloor. The guiding line can be an integral part of the sensor, for example as an elongated moisture sensor, but can also be a separate part such as a rope and/or pipe wherein a moisture sensor can be attached to an end of such a guiding line. The guiding line that is connected to the moisture sensor could then act as a guide for pushing the sensor into and through the casing tube, and/or for pulling the sensor out of and through the casing tube. The casing tube allows for installing a sensor at a predetermined location, guiding the sensor through the casing tube by means of the guideline, e.g. after the casing tube has been provided in position and/or after the bathroom floor has been realized.

In some embodiments, the leakage detection device according to any of the preceding claims, wherein the distal end of the casing tube is coupled to the coupling structure of the bathroom subfloor module and wherein the moisture sensor is accommodated within the casing tube, preferably near the distal end of the casing tube, in moisture transferring contact with the moisture absorbing subfloor.

By coupling the distal end of the casing tube to the coupling structure, the installation of a sensor becomes more reliable, especially if the sensor has to be placed after the bathroom floor has been installed. Therefore it becomes possible to push a sensor from a proximal end of the casing tube, through the tube using the guiding line, towards the distal end of the casing tube which is then near the coupling structure of the bathroom subfloor module. Preferably, the sensor is in moisture transferring contact with the moisture absorbing floor such that it can detect any water leakage occurring near the bathroom floor submodule. The moisture transferring contact could be achieved by locating the sensor such that it extends from the distal end of the casing tube outwardly wherein the sensor is not covered by said casing tube, but it may also be achieved by including additional moisture absorbing material within the casing tube, for example along the inner walls of said casing tube.

Optionally, the casing tube is moisture absorbing at a location where the moisture sensor is accommodated.

When the casing tube is moisture penetrable at a location of the moisture sensor, the moisture sensor is then still capable of detecting water leakage while simultaneously being protected by the casing tube. The casing tube could be moisture penetrable by being porous. Alternatively it could be made of a material that allows for moisture penetration. More alternatively the casing tube could have small openings that allow for moisture to seep through.

Optionally, the coupling structure is in moisture absorbing contact with the subfloor of the bathroom.

When the coupling structure is in moisture absorbing contact with the subfloor of the bathroom, the moisture sensor is then still capable of detecting water leakage while simultaneously being associated with the coupling structure. The coupling structure could be in moisture absorbing contact with the subfloor of the bathroom by being porous. Alternatively material could be embedded within the coupling structure that allows for moisture absorbing contact.

In some embodiments, the guiding line and/or the moisture sensor are replaceable in the casing tube.

Replacing the guiding line and/or the moisture sensor can be beneficial since a sensor might malfunction, break, run out of battery, or any other reason where it might be preferable to replace the sensor. It is more convenient to replace the sensor, preferably via the casing tube, in contrast to having to remove and replace the bathroom floor to reach the sensor that needs to be replaced. In some embodiments, the sensor might be a single-use sensor which needs to be replaced after detecting a water leakage. The guiding line might be integrally connected to the sensor in which case the guiding line also needs to be replaced simultaneously with the sensor. In some embodiments the guiding line is separately connected from the moisture sensor and does not need replacement.

The guiding line may include a sensor data line and/or a power supply line.

A sensor data line can be used to provide a reliable wired connection between the moisture sensor and a receiving unit such as a processing unit for receiving sensor data such as for the detection of a water leakage. A power supply line may be beneficial to provide a reliable wired power connection to the sensor as an alternative to a battery that might run out of energy at inopportune times. Optionally, the sensor data line and/or the power supply line act form the guiding line for guiding the moisture sensor through the casing tube towards a bathroom floor submodule.

The invention also relates to a leakage detection system, comprising a leak detection device according to any of the preceding claims, and a processing unit connected to the moisture sensor for receiving moisture sensor data, wherein the processing unit is arranged for generating an alert signal, such as for closing a water supply valve, upon receipt of moisture sensor data indicative of an amount of moisture.

By generating an alert signal consequential damage caused by prolonged exposure of the walls, ceilings, and/or floors to water from a water leakage can be minimized. Generally, the processing unit may be located offset from the moisture sensor. Then, the moisture sensor can communicate with the processing unit through for example a sensor data line or through wireless communication. Similarly, the processing unit can generate and communicate the alert signal through a wired communication or a wireless communication. For example, the processing unit can be in direct connection with a water supply valve actuator and can close said valve when it has received sensor data indicating a water leakage. Alternatively or additionally, the processing unit could send a warning signal to an electronic communication device, e.g. used by a house-owner, either in the form of a text message, an app, or other communicative means. The processing unit could also be arranged to send an alert signal to a third party, such as an insurer or a plumber. It is noted that, in principle, the processing unit may be located close to or integrated with the leakage detection device or with the moisture sensor itself.

In some embodiments the processing unit is arranged for comparing the moisture sensor data to a predetermined threshold value, and for generating the alert signal if the moisture sensor data exceeds the predetermined threshold value.

The processing unit can have an initial threshold value indicating that there is currently not enough moisture present to be considered a leak. Then, the processing unit can compare the moisture sensor data indicative of an amount of moisture to this threshold value, and if the moisture sensor data exceeds the threshold value, there may be a leak and a reason to generate an alert signal. Setting a threshold value might be necessary since right after installation there might be some lingering moisture that could trigger a false alert. Being able to set a threshold value prevents this problem. The threshold value could be adjustable, which might be useful if the base level of moisture amount varies over time.

In some embodiments the processing unit is arranged for transmitting the alert signal to a stationary or mobile electronic communication device such as a display unit or a mobile phone respectively.

The processing unit could transmit the alert signals to a display unit in view of the house owner, or perhaps a display unit at a third party such as an insurance company or a plumber. Transmitting the alert signals to a mobile communication device such as a mobile phone or an app on a mobile phone might be beneficial to more quickly notify relevant parties that are not near a stationary display unit. The transmitted alert signals can be followed up by manual action of relevant people or by automatic actions such as connected appliances shutting themselves off, for example a water valve being turned off to minimize water damages.

In some embodiments the system also comprises a power supply for feeding the moisture sensor. Said power supply could also be arranged for feeding an electric heating floor element.

The sensor can be reliably supplied with power using a dedicated power supply, which ensures that the sensor is active and able to detect water leakages. Even more beneficially, the power supply can also feed an electric heating floor element or other electric element. This could mean a dedicated power supply for the sensor that is also used to provide power to another electric element such as an electric heating floor element. Alternatively, there may be electric heating floor elements present, that already have a dedicated power supply, and said power supply is then also used to provide power to the moisture sensor through a power supply line.

The invention furthermore relates to a bathroom subfloor module, such as a drain pipe, an electric heating floor element, or a mesh mat, the module comprising a coupling structure for association with a moisture sensor of a leak detection device as described above. In some embodiments the coupling structure may include a coupling notch, or a coupling eye, preferably arranged in a cavity of the module, such as at an underside of the module, for coupling with a distal end of the casing tube. or another structure facilitating the module to couple with the moisture sensor. Such a bathroom subfloor module could be implemented as a drain pipe, an electric heating floor element, or a mesh mat. For example a mesh mat could be provided with mesh wires and at least one moisture sensor mounted to the mesh wires. Furthermore there could be a bathroom subfloor module such as an electric heating floor element provided with a mesh mat and heating wires, wherein said bathroom subfloor module is provided with a leakage detection device and or leakage detection system as described above, wherein the moisture sensors are provided on or in the bathroom subfloor module, such as the electric heating floor element or preferably on the mesh mat of an electric heating floor element. In addition or alternatively, the bathroom subfloor module could be divided into zones, wherein each zone is provided with a moisture sensor to enable the detection of a water leakage in a specific zone. For example, there could be an electric heating floor element which is provided with a mesh mat and heating wires, and a leakage detection device and/or a leakage detection system as described above, wherein the mesh mat is divided into at least two zones, and each zone comprises a moisture sensor.

The invention further relates to a kit, comprising a moisture sensor for arranging in moisture transferring contact with a moisture absorbing subfloor of a bathroom, for detecting a water leakage occurring in the bathroom, and a processing unit connectable to the moisture sensor for receiving moisture sensor data, wherein the processing unit is arranged for generating an alert signal, such as for closing a water supply valve, upon receipt of moisture sensor data indicative of an amount of moisture.

The two components, the moisture sensor and the processing unit, could be provided from separate locations and then assembled on site in a configuration more suited for the specific installation at hand.

The invention still further relates to a method of applying a leakage detection device as described above and/or a system as described above in a bathroom, comprising a step of arranging the moisture sensor in moisture transferring contact with a moisture absorbing subfloor of the bathroom, preferably by embedding the moisture sensor in the moisture absorbing subfloor.

For the purpose of preparing the leak detection device and/or system to operate, the moisture sensor is brought in a moisture transferring contact with the moisture absorbing subfloor of the bathroom. The moisture transferring contact can, for example be achieved by placing the sensor on top of the subfloor, but also by embedding the sensor in the subfloor, or alternatively, additional moisture transferring material can be placed between the sensor and the subfloor. Preferably, the moisture sensor is located after the subfloor has been formed, e.g. using the above described casing tube, e.g. in order to prevent any accidental movement of the sensor during installation of the bathroom floor.

The invention also relates to a method applying a leakage detection device as described above and/or a system as described above in a bathroom, comprising a step of operating the moisture sensor.

The leakage detection device generally may be supplied with power and may communicate measured sensor data when the leak detection device has detected a leak. The leakage detection device can e.g. actively communicate data corresponding to the moisture content in the subfloor. For example, the leakage detection device can be arranged to continuously send a signal that the subfloor is free of water leakage and send another signal when the sensor detects a leak. Alternatively, the leakage detection device could be arranged to continuously measure the moisture content in the subfloor but only send a signal when a leak has been detected. In yet another embodiment, the leakage detection device is arranged for finalizing a process of sending signals upon leakage detection. The leakage detection device could be arranged for operating as a beacon autonomously sending a measurement signal or responding to an interrogating signal, e.g. sent by the processing unit. Furthermore the sensor could be operating continuously or it could operate periodically e.g. by measuring at time intervals e.g. to extend battery life.

The invention also relates to a method of applying a leakage detection device as described above and/or a system as described above in a bathroom, comprising a step of replacing the moisture sensor in the casing tube, and verifying that the replaced moisture sensor is located in proximity of the bathroom subfloor module, wherein, preferably after a successful verification, an insurance certificate is awarded.

The possibility of replacing the moisture sensor is beneficial for example when the sensor is malfunctioning and/or run out of power. It is advantageous being able to replace the sensor without having to remove and replace the entire bathroom floor, or portions thereof. Furthermore it is beneficial to verify that the moisture sensor is placed at a predetermined location. Certain locations might provide more accurate or quicker detection of a water leakage. If such locations are present, it may be preferable to place the sensors at said locations. The location of the replaced sensors can be verified using various methods. For example, the sensor may have a metallic and/or magnetic component that can be measured using a metal detector or a magnet. The leakage detection device may comprise a hard element that produces an audible signal such as a knocking sound that can be heard when the sensor reaches a predetermined sensor location and comes in contact with the distal end of the casing tube, with a cavity of the coupling arrangement or another structure.

The insurance certificate being awarded for a proper and verified installation is a beneficial sign to insurers that the installed bathroom has proper precautions to minimize possible consequential damages to the walls, floors, and/or ceilings, due to incidental and/or continuous exposure to water caused by a water leakage. Insurers could request such a certificate to be mandatory for proper insurance, and/or could offer lower rates of insurance premium. A proper and verified installation could be considered by an insurer as less risky and therefore a smaller insurance premium could be charged.

The invention also relates to a method of applying a leakage detection device as described above and/or a system as described above in a bathroom, comprising a step of generating an alert signal if the moisture sensor data exceeds the predetermined threshold value.

By generating alert signals only if the moisture sensor data exceeds the predetermined threshold value, a limitation in false alerts can be obtained. During installations, there may be lingering levels of moisture, that could cause an alert signal to be generated even though there is no current water leakage. By setting a threshold value at a level that is at least equal to a level where there is no water leakage, false alert signals can be reduced. Being able to set, and/or adjust the threshold value is beneficial to accommodate varying installation conditions and situations. Installations in a more humid climate might require different thresholds than for example an installation in a rather dry climate. Furthermore there may be different materials and processes used during the installation and near the moisture sensor that could also affect the threshold value. Therefore having the option to set and adjust the threshold value that is used as a comparison to the sensor data indicative of an amount of moisture is beneficial to account for varying situations.

Further advantageous embodiments according to the invention are described in the following claims.

It should be noted that the technical features described above or below may each on its own be embodied in a device, system or method, i.e. isolated from the context in which it is described, separate from other features, or in combination with only a number of the other features described in the context in which it is disclosed. Each of these features may further be combined with any other feature disclosed, in any combination.

The invention will now be further elucidated on the basis of a number of exemplary embodiments and an accompanying drawing. In the drawing:
It is noted that the figures show merely a preferred embodiment according to the invention. In the figures, the same reference numbers refer to equal or corresponding parts.
Fig. 1 shows a schematic cross-sectional view of a bathroom including a leak detection device according to a first embodiment of the invention;
Fig. 2 shows a side view of a bathroom floor submodule according to a first embodiment of the invention; and
Fig. 3 shows a side view of a bathroom floor submodule according to a second embodiment of the invention.

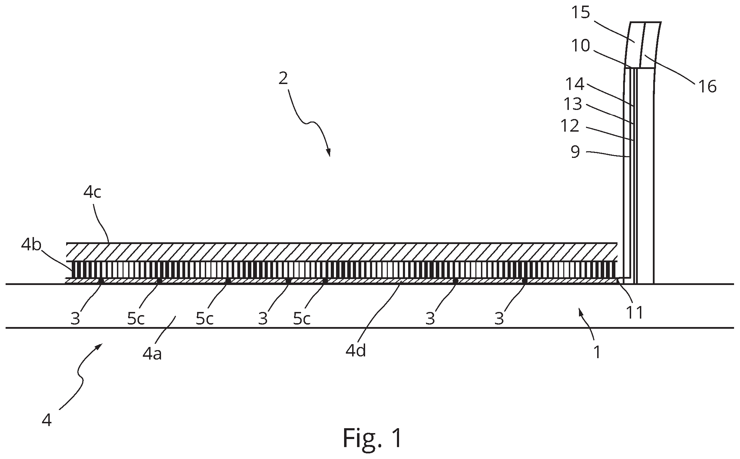

Figure 1 shows a schematic cross-sectional view of a bathroom 2 including a leakage detection device 1 according to a first embodiment of the invention for detecting a water leakage occurring in the bathroom 2. As shown, the bathroom 2 has a floor 4 generally including multiple layers. The bathroom 2 is provided with a subfloor 4a supporting further floor layers.

The floor 4 is provided with an adhesive layer 4b covering at least a portion of the subfloor 4a and a mesh mat 4d below the adhesive layer 4b. The mesh mat 4d is used to place several moisture sensors 3 near electric floor heating elements 5 such as heating wires 5c of for example an electric floor heating mat. The adhesive layer 4b contains tile adhesive material. On top of the adhesive layer 4b a top layer 4c is provided, including tiles, linoleum or another top floor material that is attached to the adhesive material of the adhesive layer 4b. In the shown embodiment, the subfloor 4a, the adhesive layer 4b, the top layer 4c, and a mesh mat 4d form a floor 4. It is noted that, generally, the floor 4 may include additional layers such as an intermediate layer between the subfloor 4a and the adhesive layer 4b. Also, the floor 4 may include merely two layers, e.g. the subfloor 4a and a top layer such as a linoleum layer.

In the shown embodiment, the mesh mat 4d below the adhesive layer 4b includes a single or a multiple number of electric floor heating elements 5. However, the mesh mat 4d may be provided without any floor heating elements.

Further, in the shown embodiment, the subfloor 4a includes a sand-cement layer 4a, also referred to as screed. The sand-cement layer 4a is water absorbing, generally having the ability to absorb, spread and/or disseminate moisture such as water throughout its sublayer 4a.

The leakage detection device 1 comprises a moisture sensor 3 that is arranged in moisture transferring contact with the moisture absorbing subfloor 4a of the bathroom 2. In the shown embodiment, the moisture sensor 3 is placed on top of the subfloor 4a and in a mesh mat 4d. The sensor 3 could also be placed in the layer of tile adhesive 4b, for example when there is no need for a mesh mat 4d with optional heating elements 5 provided in said mesh mat 4d.

The moisture transferring contact in the shown embodiment is achieved by placing the moisture sensor 3 on top of a surface of the subfloor 4a of the bathroom 2. However in another embodiment, the moisture sensor 3 could be embedded in the subfloor 4a of the bathroom 2, or in a layer of tile adhesives 4b, or in the mesh mat 4d. Due to the moisture absorbing characteristic of the subfloor 4a, the moisture sensor 3 is arranged to detect a water leakage even if the sensor 3 is not in close proximity to the occurred leak.

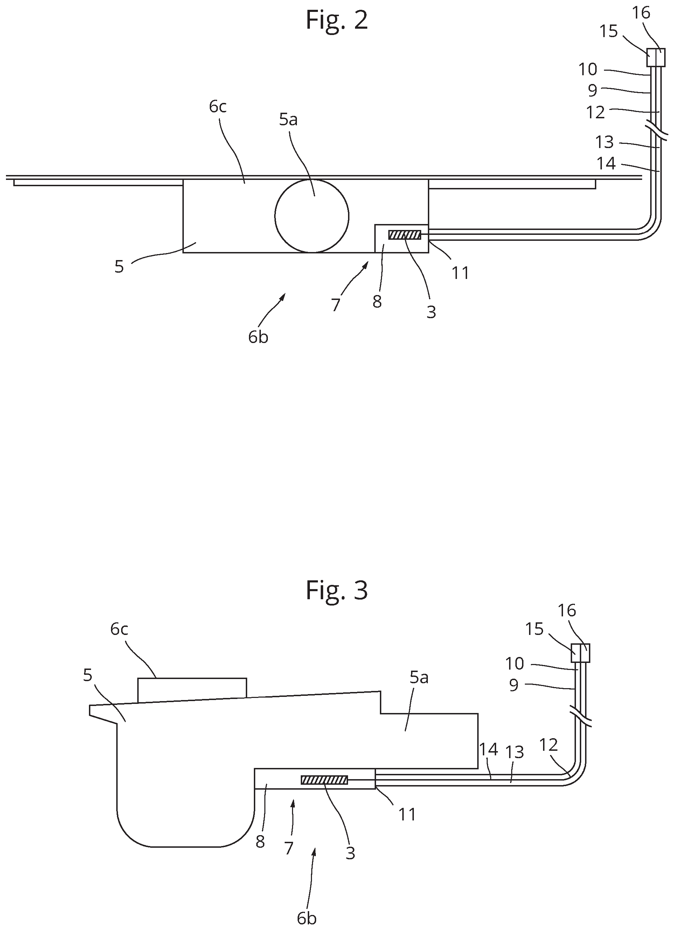

The moisture sensor 3 is located in proximity of a bathroom subfloor module 5. In the shown embodiment there are multiple bathroom subfloor modules 5 that are near the moisture sensor 3 such as the floor heating elements 5, 5c. The multiple bathroom subfloor modules 5 are at least partially embedded in the mesh mat 4d above the moisture absorbing subfloor 4a, and below the adhesive layer 4b. In other embodiments, the moisture sensor 3 is located in proximity of a bathroom subfloor module 5 as shown in Figure 2 and Figure 3.

The leakage detection device 1 also has a casing tube 9 that extends from a proximal end 10 to a distal end 11. Here, the distal end 11 of the casing tube 9 is coupled to the mesh mat 4d. As illustrated in Figure 2 and 3, it is also possible for the distal end 11 of the casing tube 9 to be coupled to a coupling structure of a bathroom floor submodule 5. The casing tube 9 can be coupled in various ways. In the embodiment shown in Fig. 1 the casing tube 9 is coupled by inserting the casing tube distal end 11 in the mesh mat 4d allowing the mesh mat 4d to receive the moisture sensor 3. In another embodiment, the distal end 11 of the casing tube 9 could be inserted into a different floor layer such as subfloor 4a and/or adhesive layer 4b.

Figure 2 shows a side view of a bathroom floor submodule according to a first embodiment of the invention associated with a leak detection device 1 according an embodiment of the invention. The bathroom 2 may include dry compartments, but also wet compartments that are provided with bathroom accessories such as a shower, bath, and/or a washbasin. Bathroom subfloor modules can be placed in such a wet compartment and near such bathroom accessories, for example by placing a bathroom subfloor module embodied as a drain siphon near a shower, bath, and/or a washbasin. In Figure 2, the bathroom subfloor module is embodied by a fixed drain siphon, wherein the fixed drain siphon is connected to a drain pipe 5a. The bathroom subfloor module 5 can be partially embedded in layers of the floor. For example, a fixed drain siphon could be embedded in the floor such that the top side 6c of the drain is level with the top layer of tiles 4c, while the bathroom floor submodule then extends from said topside 6c downwards past the adhesive layer 4b and partially embedded in the subfloor 4a.. Here, a coupling is shown wherein the casing tube 9 is coupled by placing its distal end 11 into the cavity 8 which is provided on an underside of the bathroom subfloor module 5, allowing the cavity 8 to receive the moisture sensor 3. Alternatively or additionally, a coupling process may be achieved by connecting the casing tube 9 to a hook or eyelet that is attached to the submodule 5. In another embodiment the cavity 8 is part of a coupling structure 7 which is embodied as a protrusion 7 that is provided on an underside of the bathroom subfloor module, wherein the distal end 11 of the casing tube 9 can be coupled to the protrusion. The coupling could be achieved by the distal end 11 of the casing tube 9 encompassing the protrusion 7 sliding over the protrusion 7, alternatively the coupling could be achieved by sliding the distal end 11 of the casing tube 9 into the protrusion 7. In another embodiment the casing tube 9 is not coupled to any coupling structure 7. The casing tube 9 may be connected to another structure, e.g. an element that has been mounted to a structure below the sublayer 4a. Further, the distal end 11 of the casing tube 9 may be free, uncoupled from any other structure. The casing tube 9 may at least serve as a layer of protection e.g. for mechanically protecting the moisture sensor 3.

Figure 3 shows a sideview of a bathroom floor submodule according to a second embodiment of the invention associated with a leak detection device 1 according an embodiment of the invention. Figure 3 is similar to figure 2 except that the bathroom floor submodule is embodied as a rotating drain siphon 5.

In the embodiments shown in Figs. 1-3, the moisture sensor 3 extends from the casing tube 9 outwardly. However, in other embodiments, the moisture sensor 3 may be located within the casing tube 9, preferably near its distal end 11.

In the shown embodiments, the casing tube 9 is near its distal end 11 moisture absorbable which maintains the moisture transferable contact between the moisture sensor 3 that is accommodated just outside the casing tube 9 on the one hand, and the moisture absorbing subfloor 4 on the other hand. The casing tube 9 can be moisture absorbing through either making the casing tube 9 from moisture absorbing material, by placing moisture absorbing material in the casing tube wall, by providing a porous casing tube wall, and/or by providing small openings in the wall of the casing tube 9. Then, the casing tube is moisture absorbing at a location where the moisture sensor is accommodated.

The moisture sensor 3 is connected to a guiding line 12 running through the casing tube 9. The guiding line 12 may be used to both push the sensor 3 through the casing tube 9 from the proximal end 10 to the distal end 11 of the casing tube 9, but may also be used to pull the sensor 3 through the casing tube 9 from the distal end 11 to the proximal end 10 of the casing tube 9. This makes the moisture sensor 3 and/or the guiding line 12 replaceable without having to reinstall the entire bathroom floor or portions thereof. The guiding line 12 may only be a wire or a rope intended for pushing and pulling the moisture sensor 3 through the casing tube 9. In the shown embodiment, the guiding line 12 is implemented another casing tube 12 that enclosing a sensor data line 13 and a power supply line 14 running through the guiding line 12. The sensor data line 13 enables a wired communication between the moisture sensor 3 and a processing unit 15, through which wired communication the measured data indicative of an amount of moisture can be transmitted. The communication between the sensor 3 and the processing unit 15 could also be realized via a wireless connection, in which case the guiding line 12 may not include a sensor data line 13. The power supply line 14 enables the sensor 3 to be powered without the use of a local battery. In alternative embodiments, the sensor 3 has a battery and no wired power supply line 14 may be provided, but both is also possible in which the battery acts as a possible backup power supply in case the power supply line 14 momentarily interrupts supplying power during a power outage. The moisture sensor 3 and the guiding line 12 can be separated from each other to allow any replacement of only the sensor 3 and/or only the guiding line 12 to be connected to each other. In the shown embodiment the sensor 3 and the guiding line 12 are integrally connected and may need to be replaced in its entirety instead of partially. It is noted that the sensor data line 13 and/or the power supply line 14 may run separate from the guiding line 12.

Furthermore an example of a leakage detection system is shown in Figs 1-3. The system comprises a leakage detection device 1 as described, and a processing unit 15 that is connected to the moisture sensor 3. In operation, the moisture sensor 3 transmits sensor data to the processing unit 15. The data is transmitted via the sensor data line 13 to the processor unit 15, but in alternative embodiments the data can be communicated through wireless means. The processing unit 15 is arranged for receiving the transmitted moisture sensor data indicative of an amount of moisture. The data can be transmitted by the sensor 3 in an autonomous manner, functioning as a beacon, or after receipt of a request signal transmitted by the processor unit 15. In the latter case, the sensor data line 13 may allow communication between the processor unit 15 and the sensor 3. Further, the processing unit is arranged to generate an alert signal when the moisture sensor data indicative of an amount of moisture indicates that a leakage has been detected, such an indication could be determined by the amount of moisture detected. In an embodiment, a threshold value could be set and the processing unit compares the sensor data indicative of an amount of moisture to the set threshold, if the moisture sensor data exceeds the threshold. The threshold can be adjustable, to account for varying base levels amount of moisture. The processing unit generates an alert signal after the sensor data crosses the threshold value or fulfills any set of conditions indicating a water leakage. Various alert signals can be generated and transmitted. For example, an alert signal can be generated for closing a water supply valve. In addition to closing the water supply valve, a message can be sent to a stationary or a mobile electronic device, such as a display unit or a mobile phone and/or app, in order to notify a user that a leakage has occurred and/or that the supply valve has been closed due to a detected leakage in the bathroom 2. A message could also be sent to electronic devices used by third-parties, such as an insurer or a plumber, to notify them of the presence of a leakage and/or request an action on their part. The message can be sent through various means such as a text message and/or email. Besides these alert signals, an audio and/or a visual signal can be generated like an alarm signal to notify the homeowner of a leakage.

In the shown embodiment, the processing unit 15 is located offset from the sensor 3 e.g. near the proximal end 10 of the casing tube 9.

The shown system also comprises a power supply 16 for feeding the moisture sensor 3. Here the power supply 16 is connected, via the power supply line 14 to the moisture sensor 3. The combination of the power supply line 14 and the guiding line 12 serve for pushing and pulling the moisture sensor 3 through the casing tube 9. On the other hand, the power line 14 serves to feed power to the moisture sensor 3. In addition to feeding the moisture sensor 3, the power supply 16 also feeds the electric heating floor mat, in the shown embodiment of Figure 1. As a result, only a single power supply 16 is needed to power both the moisture sensor 3 and the single or multiple number of electric heating floor elements. The power supply 16 could be part of the leakage detection system that has already been placed. The electric heating floor elements could have been added later and connected to the power supply 16 of the leakage detection system. In alternative situations, a leakage detection system can be connected to a power supply 16 dedicated to pre-installed electric heating floor elements. In the shown embodiment, the power supply 16 feeds both the electric floor heating mat, the moisture sensor 3 and the processing unit 15.

The figures show a preferred end result of arranging the moisture sensor 3 in moisture transferring contact with the moisture absorbing subfloor 4 of the bathroom 2 by embedding the moisture sensor 3 in the sand-cement layer 4a of the bathroom subfloor 4. The moisture sensor 3 could, alternatively, be embedded in another and/or multiple layers of the subfloor 4a if those are present. In the shown embodiment the moisture sensor 3 is embedded in a layer of sand-cement 4a, but the sensor 3 could also be placed on top and/or a bottom of a layer or between two different layers such as between the layer of tile adhesive 4b and the layer of sand-cement 4a, however in moisture transferring contact with a moisture absorbing subfloor 4a of the bathroom 2. In the current embodiment of Figure 1, the sensor 3 is just outside a casing tube 9 that is embedded within the mesh mat 4d. Then, the sensor 3 can be arranged in direct contact with the sand-cement layer 4a. In the embodiments of Figure 2 and 3, the sensor 3 also extends beyond the distal end 11 of the casing tube 9, into the cavity 8 which is provided on a bottom side 6b of the bathroom floor submodule 5. Within the cavity 8 there may be additional moisture absorbing material present that is in moisture transferring contact with the moisture sensor 3. In other embodiments, the sensor 3 could be located within the casing tube 9, near its distal end 11'. Then, the casing tube 9 may be porous to allow moisture to penetrate into the casing tube 9 enabling a moisture transferring contact between the moisture sensor 3 in the casing tube 9 and the sand-cement layer 4a. In both cases, additional moisture absorbing material may be provided within the casing tube 9 and/or near the moisture sensor 3, in moisture transferring contact with the subfloor 4a, said additional moisture absorbing material serving as an extension of the material of the subfloor 4 bridging a distance between the sensor 3 and the material of the subfloor 4a.

During installation of the leakage detection device 1, the moisture sensor is arranged in moisture transferring contact with the subfloor 4a. This can be achieved by providing the casing tube 9 at a location, with or without the sensor 3, such that e.g. its distal end 11 is at a predetermined sensing location and that, preferably, its proximal end 10 is near the processing unit 15. Then, the subfloor 4a may be formed rendering the location of the casing tube 9 permanent. If the casing tube 9 has been placed without the sensor, the sensor 3 may be placed using the guiding line 12, after the subfloor 4a has actually been formed.

After installing the moisture sensor 3, the sensor 3 can be operated to start detecting leakages. This involves the sensor 3 taking measurements, which can be taken continuously or intermittently . Measurement data may then be communicated to the processing unit 15. In the shown embodiment, the embedded sensor 3 can be measuring the moisture content in the sand-cement layer 4a and then transmit the data through the sensor data line 13 to the processing unit 15. The measuring can be done continuously or intermittently , e.g. periodically after a fixed time interval to save power. Furthermore the data can be transmitted continuously through the sensor data line 13 towards the processing unit 15 or intermittently where it only communicates after passing time intervals. In other embodiments, the sensor 3 only communicates data when a leakage has been detected to keep transmission to a minimum.

There might be situations in which it might be required to replace the moisture sensor 3 that is in the casing tube 9 and verify that the replaced moisture sensor 3 is located in proximity of a bathroom subfloor module 5. After a successful verification, the installation is awarded with an insurance certificate. Such an insurance certificate could be made mandatory for insurers to insure a bathroom for possible consequential damages caused by an incidental or continuous water leakage. A proper installation of the moisture sensor 3 would identify a water leakage sooner, and possible consequential damages can be kept minimal through swift intervention after a fast alert signal has been generated. Minimizing consequential damages is of interest to both the owner of the bathroom as the insurer. In the shown embodiment, this would require pulling the guiding line 12 that is connected to the moisture sensor 3 to pull the moisture sensor 3 through the casing tube 9 from the distal end 11 towards the proximal end 10. Then, the sensor 3 or both the sensor 3 and the guideline 12 can be replaced. Subsequently, the sensor 3 is placed into the proximal end 10 of the casing tube 9 and pushed towards the distal end 11 of the casing tube 9 by pushing the guiding line 12 into the casing tube 9. Afterwards the position of the sensor 3 may be verified to be certain that the sensor 3 is placed in proximity to the drain pipe 5a or more specifically in the cavity 8 of the protrusion 7 of the coupling structure 7 that is attached to the bathroom floor submodule 5. In the shown embodiment the position of the sensor 3 is verified through use of a metal detector (not shown). The metal detector may be placed above the bathroom floor submodule 5 near the bathroom floor and may verify that the sensor 3 has been placed within the proximity of the bathroom floor submodule 5. There are alternative verification methods such as using a magnet, or relying on an audio signal when the sensor 3 hits the back wall of the cavity 8 of the protrusion 7.

It is noted that the leakage detection device can not only be used in combination with a sand-cement layer 4a, but also with another moisture absorbing subfloor such as a cement layer or a wood layer, such that the moisture sensor is arranged in moisture transferring contact therewith.

The disclosure includes the following numbered embodiments:
Embodiment 1. A leakage detection device for detecting a water leakage occurring in a bathroom, the leakage detection device comprising a moisture sensor that is arranged in moisture transferring contact with a moisture absorbing subfloor of the bathroom.
Embodiment 2. The leakage detection device according to embodiment 1, wherein the moisture absorbing subfloor of the bathroom comprises a sand-cement layer or screed and wherein the moisture sensor is in moisture transferring contact with the sand-cement layer or screed, preferably embedded in the sand-cement layer or screed.
Embodiment 3. The leakage detection device according to any of the preceding embodiments, wherein the moisture sensor is located in proximity of a bathroom subfloor module, such as a drain pipe at least partially embedded in the moisture absorbing subfloor.
Embodiment 4. The leakage detection device according to any of the preceding embodiments, wherein the moisture sensor has been attached to an outer surface of the bathroom subfloor module, preferably to an outer surface at a bottom side of the bathroom subfloor module.
Embodiment 5. The leakage detection device according to any of the preceding embodiments, wherein the moisture sensor is associated with a coupling structure of the bathroom subfloor module.
Embodiment 6. The leakage detection device according to any of the preceding embodiments, further comprising a casing tube, at least partially cast in the subfloor of the bathroom, the casing tube extending between a distal end and a proximal end, as well as a guiding line connected to the moisture sensor and running through the casing tube.
Embodiment 7. The leakage detection device according to any of the preceding embodiments, wherein the distal end of the casing tube is coupled to the coupling structure of the bathroom subfloor module and wherein the moisture sensor is accommodated within the casing tube, preferably near the distal end of the casing tube, in moisture transferring contact with the moisture absorbing subfloor.
Embodiment 8. The leakage detection device according to any of the preceding embodiments, wherein the casing tube is moisture absorbing at a location where the moisture sensor is accommodated.
Embodiment 9. The leakage detection device according to any of the preceding embodiments, wherein the coupling structure is in moisture absorbing contact with the subfloor of the bathroom.
Embodiment 10. The leakage detection device according to any of the preceding embodiments, wherein the guiding line and/or the moisture sensor are replaceable in the casing tube.
Embodiment 11. The leakage detection device according to any of the preceding embodiments, wherein the guiding line includes a sensor data line and/or a power supply line.
Embodiment 12. A leakage detection system, comprising a leak detection device according to any of the preceding embodiments, and a processing unit connected to the moisture sensor for receiving moisture sensor data, wherein the processing unit is arranged for generating an alert signal, such as for closing a water supply valve, upon receipt of moisture sensor data indicative of an amount of moisture.
Embodiment 13. A leakage detection system according to embodiment 12, wherein the processing unit is arranged for comparing the moisture sensor data to a predetermined threshold value, and for generating the alert signal if the moisture sensor data exceeds the predetermined threshold value.
Embodiment 14. A leakage detection system according to embodiment 12 or 13, wherein the processing unit is arranged for transmitting the alert signal to a stationary or mobile electronic communication device such as a display unit or a mobile phone respectively.
Embodiment 15. The leakage detection system according to any one of embodiments 12-14, further comprising a power supply for feeding the moisture sensor.
Embodiment 16. The leakage detection system according to any one of embodiments 12-15, wherein the power supply is also arranged for feeding an electric heating floor element.
Embodiment 17. A bathroom subfloor module, such as a drain pipe, an electric heating floor element, or a mesh mat, the module comprising a coupling structure for association with a moisture sensor of a leak detection device according to any of the preceding embodiments.
Embodiment 18. A bathroom subfloor module according to claim 17, wherein the coupling structure includes a coupling notch, or a coupling eye, preferably arranged in a cavity of the module, such as at an underside of the module, for coupling with a distal end of the casing tube.
Embodiment 19. A bathroom subfloor module according to embodiment 17 or 18, wherein the bathroom subfloor module is provided with a leakage detection device according to any one of the embodiments 1-11 and/or a leakage detection system according to any one of embodiments 12-16, wherein the bathroom subfloor module is an electric heating floor element provided with a mesh mat and heating wires, wherein the moisture sensors are provided on or in the electric heating floor element, preferably wherein the moisture sensors are provided on the mesh mat of an electric heating floor element.
Embodiment 20. A bathroom subfloor module according to embodiment 19, wherein the mesh mat is divided into at least two zones, and each zone comprises a moisture sensor.
Embodiment 21. A kit, comprising a moisture sensor for arranging in moisture transferring contact with a moisture absorbing subfloor of a bathroom, for detecting a water leakage occurring in the bathroom, and a processing unit connectable to the moisture sensor for receiving moisture sensor data, wherein the processing unit is arranged for generating an alert signal, such as for closing a water supply valve, upon receipt of moisture sensor data indicative of an amount of moisture.
Embodiment 22. A method of installing a leakage detection device according to any of the preceding embodiments 1-11 and/or a system according to any of the preceding embodiments 12-16 in a bathroom, comprising a step of arranging the moisture sensor in moisture transferring contact with a moisture absorbing subfloor of the bathroom, preferably by embedding the moisture sensor in the moisture absorbing subfloor.
Embodiment 23. A method according to embodiment 22, wherein the step of arranging the moisture sensor is preceded by a step of removing another moisture sensor, preferably further including a step of verifying that the arranged moisture sensor is located in proximity of the bathroom subfloor module, wherein, preferably after a successful verification, an insurance certificate is awarded.
Embodiment 24. A method of operating a leakage detection device according to any of the preceding embodiments 1-11 and/or a system according to any of the preceding embodiments 12-16 in a bathroom, comprising a step of receiving moisture sensor data from the moisture sensor indicative of an amount of moisture.
Embodiment 25. A method according to embodiment 24, comprising a step of comparing the moisture sensor data to a predetermined threshold value, and a step of generating an alert signal if the moisture sensor data exceeds the predetermined threshold value.

Herein, the invention is described with reference to specific examples of embodiments of the invention. It will, however, be evident that various modifications and changes may be made therein, without departing from the essence of the invention. For the purpose of clarity and a concise description features are described herein as part of the same or separate embodiments, however, alternative embodiments having combinations of all or some of the features described in these separate embodiments are also envisaged.

However, other modifications, variations, and alternatives are also possible. The specifications, drawings and examples are, accordingly, to be regarded in an illustrative sense rather than in a restrictive sense. These and other embodiments will be apparent for the person skilled in the art and are considered to fall within the scope of the invention as defined in the following claims.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to an advantage.

## Claims

1. A leakage detection device for detecting a water leakage occurring in a bathroom, the leakage detection device comprising a moisture sensor that is arranged in moisture transferring contact with a moisture absorbing subfloor of the bathroom.

2. The leakage detection device according to claim 1, wherein the moisture sensor is associated with a coupling structure of the bathroom subfloor module.

3. The leakage detection device according to claim 1 or 2, further comprising a casing tube, at least partially cast in the subfloor of the bathroom, the casing tube extending between a distal end and a proximal end, as well as a guiding line connected to the moisture sensor and running through the casing tube.

4. The leakage detection device according to any of the preceding claims, wherein the distal end of the casing tube is coupled to the coupling structure of the bathroom subfloor module and wherein the moisture sensor is accommodated within the casing tube, preferably near the distal end of the casing tube, in moisture transferring contact with the moisture absorbing subfloor.

5. The leakage detection device according to any of the preceding claims, wherein the casing tube is moisture absorbing at a location where the moisture sensor is accommodated.

6. The leakage detection device according to any of the preceding claims, wherein the coupling structure is in moisture absorbing contact with the subfloor of the bathroom.

7. The leakage detection device according to any of the preceding claims, wherein the moisture absorbing subfloor of the bathroom comprises an adhesive layer, or an adhesive-containing layer, or an adhesive-based layer, and wherein the moisture sensor is in moisture transferring contact with the adhesive layer, or the adhesive-containing layer, or the adhesive-based layer, preferably embedded in the adhesive layer, or the adhesive-containing layer, or the adhesive-based layer.

8. A leakage detection system, comprising a leak detection device according to any of the preceding claims, and a processing unit connected to the moisture sensor for receiving moisture sensor data, wherein the processing unit is arranged for generating an alert signal, such as for closing a water supply valve, upon receipt of moisture sensor data indicative of an amount of moisture, preferably wherein the processing unit is arranged for comparing the moisture sensor data to a predetermined threshold value, and for generating the alert signal if the moisture sensor data exceeds the predetermined threshold value.

9. A leakage detection system according to claim 8, wherein the processing unit is arranged for transmitting the alert signal to a stationary or mobile electronic communication device such as a display unit or a mobile phone respectively.

10. The leakage detection system according to claim 8 or 9, wherein the power supply is also arranged for feeding an electric heating floor element.

11. A bathroom subfloor module, such as a drain pipe, an electric heating floor element, or a mesh mat, the module comprising a coupling structure for association with a moisture sensor of a leak detection device according to any of the preceding claims.

12. A bathroom subfloor module according to claim 11, wherein the coupling structure includes a coupling notch, or a coupling eye, preferably arranged in a cavity of the module, such as at an underside of the module, for coupling with a distal end of the casing tube.

13. A bathroom subfloor module according to claim 11 or 12, wherein the bathroom subfloor module is provided with a leakage detection device according to any one of the claims 1-7 and/or a leakage detection system according to any one of claims 8-10, wherein the bathroom subfloor module is an electric heating floor element provided with a mesh mat and heating wires, wherein the moisture sensors are provided on or in the electric heating floor element, preferably wherein the moisture sensors are provided on the mesh mat of an electric heating floor element.

14. A bathroom subfloor module according to claim 13, wherein the mesh mat is divided into at least two zones, and each zone comprises a moisture sensor.

15. A method of installing a leakage detection device according to any of the preceding claims 1-7 and/or a system according to any of the preceding claims 8-10 in a bathroom, comprising a step of arranging the moisture sensor in moisture transferring contact with a moisture absorbing subfloor of the bathroom, preferably wherein the step of arranging the moisture sensor is preceded by a step of removing another moisture sensor, preferably further including a step of verifying that the arranged moisture sensor is located in proximity of the bathroom subfloor module, wherein, preferably after a successful verification, an insurance certificate is awarded.
